Europäisches Patentamt

European Patent Office

Office européen des brevets

(11) Veröffentlichungsnummer: **0 279 027 B1**

(19)

(12) EUROPÄISCHE PATENTSCHRIFT

(45) Veröffentlichungstag der Patentschrift: **17.06.92**

(21) Anmeldenummer: **87115796.2**

(22) Anmeldetag: **28.10.87**

(51) Int. Cl.5: **C01B 31/14**

(54) Aktivkohlegranulate sowie Verfahren zu ihrer Herstellung.

(30) Priorität: **11.02.87 DE 3704132**

(43) Veröffentlichungstag der Anmeldung:
**24.08.88 Patentblatt 88/34**

(45) Bekanntmachung des Hinweises auf die
Patenterteilung:
**17.06.92 Patentblatt 92/25**

(84) Benannte Vertragsstaaten:
**BE DE GB IT NL**

(56) Entgegenhaltungen:
**DE-A- 2 644 520**
**FR-A- 627 751**
**FR-A- 1 092 450**

(73) Patentinhaber: **Degussa Aktiengesellschaft**
**Weissfrauenstrasse 9**
**W-6000 Frankfurt am Main 1(DE)**

(72) Erfinder: **Karl, Alfons, Dr.**
**Herbergstrasse 59**
**W-6466 Gründau 1(DE)**
Erfinder: **Miess, Horst**
**Röhnstrasse 1**
**W-6451 Grosskrotzenburg(DE)**
Erfinder: **Kühner, Gerhard, Dr.**
**Liesingstrasse 1**
**W-6450 Hanau 9(DE)**
Erfinder: **Von Kienle, Hartmut, Dr.**
**Am Hirschgraben 21**
**W-6056 Heusenstamm 2(DE)**

EP 0 279 027 B1

## Beschreibung

Die Erfindung betrifft Aktivkohlegranulate sowie das Verfahren zu ihrer Herstellung.

Es ist bekannt, Aktivkohlegranulate, die bei der Benutzung spontan mit Wasser zerfallen, herzustellen, indem man pulverförmige Aktivkohle, Kieselsol, Wasser und gegebenenfalls Hilfsstoffe, wie Gelatine, miteinander vermischt, anschließend granuliert und trocknet (DE-OS 30 15 439).

Die derart hergestellten Aktivkohlegranulate haben den Nachteil, daß sie als Bindemittel Kieselsol enthalten. Kieselsol steht nur als wässrige Lösung zur Verfügung. Es ist nur begrenzt lagerfähig und empfindlich gegen äußere Temperatureinflüsse. Ein wasserfreies Granulat mit guten anwendungstechnischen Eigenschaften kann nach dem bekannten Verfahren nur durch vorsichtiges Trocknen hergestellt werden. Zur Erzielung besonders guter Härten müssen die bekannten Granulate Hilfsmittel wie Gelatine enthalten. Die Verwendung der wäßrigen Kieselsollösung hat weiterhin den Nachteil, daß eine große Wassermenge in die Mischung eingebracht wird, die nur schwer aus den Granulaten entfernt werden kann.

Weiterhin ist es bekannt, zur Schönung von alkoholischen Getränken und Fruchtsäften Aktivkohlegranulate einzusetzen, die durch Granulieren von feingemahlener Aktivkohle in Gegenwart von Bentonit und Wasser hergestellt wurden (vgl. DE-PS 15 67 491). Diese bekannten Granulate haben den Nachteil, daß zur Erzielung ausreichender Abriebhärten beträchtliche Mengen an Bentonit erforderlich sind. Zur Herstellung besonders fester Granulate müssen Hilfsmittel, wie z. B. Methylcellulose zugesetzt werden. Von besonderem Nachteil ist der hohe Anteil an Bentonit, das aufgrund seiner hohen Quellfähigkeit, seines hohen Adsorptions- und Ionenaustauschvermögens unerwünschte Nebenreaktionen verursachen kann.

Gegenstand der Erfindung sind Aktivkohlegranulate, enthaltend aüsschließlich pulverförmige Aktivkohle und gegebenenfalls Wasser.

Ein weiterer Gegenstand der Erfindung ist ein Verfahren zur Herstellung der Aktivkohlegranulate, welches dadurch gekennzeichnet ist, daß man pulverförmige Aktivkohle in einer Mischvorrichtung mit Wasser vermischt, homogenisiert, die so enthaltene Mischung zu Strängen verpreßt und trocknet.

Als Mischvorrichtung kann man einen bekannten Kneter bzw. eine bekannte Kugelmühle verwenden. Das Homogenisieren der Mischung kann bevorzugt in der Mischvorrichtung durchgeführt werden.

Die Mischungsreihenfolge von pulverförmiger Aktivkohle und Wasser ist beliebig.

Die erfindungsgemäßen Aktivkohlegranulate zeigen gegenüber den pulverförmigen Ausgangsaktivkohlen keine verringerte Adsorptionsfähigkeit und können in der pharmazeutischen Industrie und in der Getränkeindustrie eingesetzt werden. Sie zeichnen sich durch eine überraschend hohe Staubfähigkeit aus.

Die erhaltenen Granulate weisen - obwohl sie keine Granulationshilfsmittel enthalten - eine hohe Abriebsfestigkeit auf.

Bei der Herstellung ergibt sich der Vorteil, daß als Ausgangsstoff eine pulverförmige Aktivkohle mit bis zu 40 Gew.-% Restfeuchte, die aus dem Aktivierungsprozeß bzw. der Wäsche stammt, eingesetzt werden kann.

Beispiele:

Zur Herstellung der Granulate werden die Pulverkohlen I und II eingesetzt.

Die Pulverkohlen sind wie folgt gekennzeichnet:

| Aktivkohle I | |
|---|---|
| Jodzahl | 895 mg/g |
| Melasse-mg-zahl | 255 mg |
| Mahlfeinheit | 92 Gew.-% <40 $\mu$ (DIN 4188) |
| Aschegehalt | 17,9 Gew.-% |

| Aktivkohle II | |
|---|---|
| Jodzahl | 1140 mg/g |
| Melasse-mg-zahl | 160 mg |
| Mahlfeinheit | 90 Gew.-% <40 $\mu$ (DIN 4188) |
| Aschegehalt | 1,5 Gew.-% |

Variante A: Granulation in der Strangpresse

Die pulverförmig Aktivkohle und Wasser werden im Kneter homogenisiert. Das Gemisch wird dann in der Strangpresse zu Strängen mit einem Durchmesser von 4 mm verpreßt.

Variante B: Granulation im Doppelschneckenextruder

Die pulverförmige Aktivkohle wird in der Kugelmühle homogenisiert. Das trockene Gemisch wird dann im Extruder mit Wasser versetzt, geknetet und zu Strängen mit einem Durchmesser von 4 mm extrudiert.

Das frisch gepreßte Gut ist noch sehr weich. Erst durch die Trocknung bei 110 bis 120 °C erhalten die Granulate ihre Festigkeit, wobei die Temperatur keinen Einfluß auf die Festigkeit der Granulate hat, sondern lediglich die Trocknungszeit beeinflußt.

Methode zur Bestimmung der Abriebfestigkeit

Zur Bestimmung der Abriebfestigkeit der Granulate wird das Gerät benutzt, mit dem auch die Rollabriebhärte von Korn- und Formkohlen ermittelt wird (siehe Dr. von Kienle und Dr. Bäder, Aktivkohle und ihre Anwendung, Seite 58, Ferdinand Enke Verlag, Stuttgart 1980). Der Test wird allerdings ohne eingelegten Eisenstab durchgeführt. Die Rollabriebhärte stellt den nicht abgeriebenen Prozentsatz der Einwaage dar.

Pulverkohlegranulate auf Basis von pulverförmiger Aktivkohle I

Nach den Verfahrensvarianten A und B und unter Zusatz von Wasser werden auf Basis von pulverförmiger Aktivkohle I Granulate hergestellt.

Tabelle 1:

| Beispiele Nr. | Kieselsäure (Gew.-%) | Feststoff/ Wasser- Verhältnis | Variante | Abrieb- härte (Gew.-%) |
|---|---|---|---|---|
| 1 | – | 1.0 | A | 94.0 |
| 2 | – | 0.8 | B | 88.8 |

Pulverkohlegranulate auf Basis von pulverförmiger Aktivkohle II

Nach der Verfahrensvariante A und unter Zusatz der in der Tabelle 2 angegebenen Menge an Wasser werden auf Basis von pulverförmiger Aktivkohle II Granulate hergestellt.

| Beispiele Nr. | Kieselsäure (Gew.-%) | Feststoff/ Wasser- Verhältnis | Variante | Abrieb- härte (Gew.-%) |
|---|---|---|---|---|
| 3 | - | 0.75 | A | 85.4 |

Eigenschaften der Pulverkohlegranulate

Alle hergestellten Pulverkohlegranulate - unabhängig vom verwendeten Aktivkohletyp und der Zugabemenge - zerfallen spontan unter Aufschäumen in Wasser und auch in anderen polaren Lösungsmitteln. Für die Adsorptionsmessungen werden die Granulate direkt eingesetzt, ohne daß vor oder während der Bestimmung eine mechanische Zerkleinerung vorgenommen wird.

## Tabelle 3: Adsorptionsdaten der Pulvergranulate

| Beispiele Nr. | Benzolaufnahme (200°C,trockene Luft) 0.9  0.1  0.01 | | | Jodzahl mg/g | Melassezahl mg |
|---|---|---|---|---|---|
| Aktivkohle I | - | - | - | 895 | 255 |
| 1 | 48.0 | 28.4 | 19.2 | 880 | 235 |
| Aktivkohle II | - | - | - | 1140 | 160 |
| 3 | 64.0 | 38.6 | 25.7 | 1140 | 165 |

Im Vergleich mit den entsprechenden Pulverkohlen zeigen die Granulate trotz Granulation nahezu keine Veränderungen in der Melasse-mg-zahl und in der Jodadsorption. An den Granulaten läßt sich auch im Gegensatz zu den pulverförmigen Aktivkohlen sehr leicht die Benzoldampfadsorption aus der Gasphase bestimmen.

**Patentansprüche**

**1.** Aktivkohlegranulate, enthaltend aüsschließlich pulverförmige Aktivkohle, und gegebenenfalls Wasser.

**2.** Verfahren zur Herstellung der Aktivkohlegranulate gemäß Anspruch 1, dadurch gekennzeichnet, daß man pulverförmige Aktivkohle in einer Mischvorrichtung mit Wasser vermischt, homogenisiert, die so erhaltene Mischung zu Strängen verpreßt und trocknet.

**Claims**

**1.** Active carbon granules containing exclusively powderform active carbon and optionally water.

**2.** A process for the production of the active carbon granules claimed in claim 1, characterized in that powderform active carbon is mixed with water in a mixer and homogenized and the resulting mixture is extruded to strands and dried.

**Revendications**

**1.** Granulés de charbon actif renfermant exclusivement du charbon actif pulvérulent et le cas échéant de l'eau.

**2.** Procédé pour la fabrication des granulés de charbon actif selon la revendication 1, caractérisé en ce que l'on mélange du charbon actif pulvérulent avec de l'eau dans un dispositif de mélange, que l'on homogénéise, que l'on comprime le mélange ainsi obtenu en cordes et que l'on sèche.